# EUROPEAN PATENT APPLICATION

(11) **EP 4 484 356 A1**
(43) Date of publication of application: **01.01.2025**
(21) Application number: 24184560.1
(22) Date of filing: 26.06.2024
(51) Int. Cl.: B66F 9/075, B62B 5/06, B66F 9/24, B66F 17/00

(54) **SYSTEMS AND METHODS FOR MATERIAL HANDLING VEHICLE TILLER ARM ANGLE DETECTION**

(30) Priority: 27.06.2023 US 202363523589 P
(71) Applicant: The Raymond Corporation, Greene, NY 13778 (US)
(72) Inventor: BARTELS, Alan W., Wilton, IA 52778 (US); GOEKE, Jerry L., Davenport, IA 52804 (US)
(74) Representative: Zacco Sweden AB

(57) **Abstract**

A tiller arm detection system for a material handling vehicle (100) can include a tiller arm (112) having a cam assembly (424). The cam assembly (424) can include a first cam (220) with a first surface profile and a second cam (224) with a second, different surface profile. The tiller arm detection system can further include a first sensor (700) to detect a portion of the first cam (220), a second sensor (800) to detect a portion of the second cam (224), and a controller (120) to communicate with the first sensor (700) and the second sensor (800) to determine a position of the tiller arm (112) based on the detected portion of the first cam (220) or the second cam (224). The controller (120) may activate a feedback system (104) based on the detected portion of the first cam (220) or the second cam (224).

## Description

### CROSS-REFERENCE TO RELATED APPLICATIONS

This application claims the benefit of U.S. Provisional Patent Application No. 63/523,589, filed June 27, 2023, which is incorporated by reference herein in its entirety.

### BACKGROUND

Material handling vehicles are commonly found in warehouses, factories, shipping yards, and, generally, wherever pallets, packages, or loads of goods are moved from place to place. Material handling vehicles typically include a load bearing fork (e.g., for supporting a load), a motor, a steering system, and a brake. In some examples, material handling vehicles can include an operator station from which an operator can control (e.g., operate) the material handling vehicle.

### SUMMARY

In one aspect, the present disclosure describes a tiller arm detection system for a material handling vehicle. The tiller arm detection system can include a tiller arm having a cam assembly. The cam assembly can include a first cam with a first surface profile and a second cam with a second, different surface profile. The tiller arm detection system can further include a first sensor to detect a portion of the first cam, a second sensor to detect a portion of the second cam, and a controller to communicate with the first sensor and the second sensor to determine a position of the tiller arm based on the detected portion of the first cam or the second cam. The controller may activate a feedback system based on the detected portion of the first cam or the second cam.

In another aspect, the present disclosure describes a method of providing feedback to an operator of a material handling vehicle. The method can include detecting, via a first sensor, a first cam of a cam assembly arranged at an end of a tiller arm of the material handling vehicle, the first cam defining a first surface profile, detecting, via a second sensor, a second cam of the cam assembly, the second cam defining a second, different surface profile, determining, via a controller in communication with the first sensor and the second sensor, a position of the tiller arm, and based on the position of the tiller arm, activating a feedback system of the material handling vehicle to provide feedback to an operator corresponding to the position of the tiller arm.

In another aspect, the present disclosure describes a tiller arm for a material handling vehicle. The tiller arm can include a cam assembly having a first cam with a first protrusion defining a first surface profile, and a second cam arranged substantially parallel to and laterally spaced from the first cam. The second cam can include a second protrusion and a third protrusion separated by a gap, the second protrusion, third protrusion, and the gap defining the second surface profile. In one example, the first cam is arranged so that the first protrusion of the first cam is arranged substantially within the gap formed between the second protrusion and the third protrusion of the second cam.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is a diagrammatic view of a material handling vehicle according to aspects of the present disclosure.
FIG. 2 is an axonometric view of one example of the material handling vehicle of FIG. 1 according to aspects of the present disclosure.
FIG. 3 is a side view of the material handling vehicle of FIG. 2 according to aspects of the present disclosure.
FIG. 4 is a plan view of a tiller arm detection system for use with the material handling vehicle of FIG. 1 according to aspects of the present disclosure.
FIG. 5 is a first side view of a tiller arm for use with the tiller arm detection system of FIG. 4 according to aspects of the present disclosure.
FIG. 6 is a second side view of the tiller arm of FIG. 5 according to aspects of the present disclosure.
FIG. 7 is a first side view of a cam assembly of the tiller arm detection system of FIG. 4 in a first position according to aspects of the present disclosure.
FIG. 8 is a first side view of the cam assembly of the tiller arm detection system of FIG. 4 in a second position according to aspects of the present disclosure.
FIG. 9 is a first side view of the cam assembly of the tiller arm detection system of FIG. 4 in a third position according to aspects of the present disclosure.
FIG. 10 is a second side view of the cam assembly of the tiller arm detection system of FIG. 4 in the first position according to aspects of the present disclosure.
FIG. 11 is a second side view of the cam assembly of the tiller arm detection system of FIG. 4 in the second position according to aspects of the present disclosure.
FIG. 12 is a second side view of the cam assembly of the tiller arm detection system of FIG. 4 in the third position according to aspects of the present disclosure.
FIG. 13 is a second side view of the cam assembly of the tiller arm detection system of FIG. 4 in a fourth position according to aspects of the present disclosure.
FIG. 14 is a second side view of the cam assembly of the tiller arm detection system of FIG. 4 in a fifth position according to aspects of the present disclosure.
FIG. 15 is a second side view of the cam assembly of another example of a tiller arm detection system for use with the material handling vehicle of FIG. 1 in a first position according to aspects of the present disclosure.
FIG. 16 is a second side view of the cam assembly of the tiller arm detection system of FIG. 15 in a second position according to aspects of the present disclosure.
FIG. 17 is a second side view of the cam assembly of the tiller arm detection system of FIG. 15 in a third position according to aspects of the present disclosure.
FIG. 18 is a first side view of another example of a cam assembly for use with the tiller arm detection system of FIG. 4 in a first position according to aspects of the present disclosure.
FIG. 19 is a first side view of the cam assembly of FIG. 18 in a second position according to aspects of the present disclosure.
FIG. 20 is a first side view of the cam assembly of FIG. 18 in a third position according to aspects of the present disclosure.

### DETAILED DESCRIPTION

The following discussion is presented to enable a person skilled in the art to make and use embodiments of the invention. Given the benefit of this disclosure, various modifications to the illustrated embodiments will be readily apparent to those skilled in the art, and the principles herein can be applied to other embodiments and applications without departing from embodiments of the invention. Thus, embodiments of the invention are not intended to be limited to embodiments shown but are to be accorded the widest scope consistent with the principles and features disclosed herein.

The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the present disclosure is not limited to material handling vehicles applications. Rather, the present disclosure may be provided for other types of vehicles, such as automobiles, buses, trains, tractor-trailers, farm vehicles, factory vehicles, and the like.

It should be noted that the various material handling vehicles (MHVs) listed above may perform a variety of load handling operations. For example, the MHVs may operate the MHV and/or the load handling portion (e.g., forks, mast, and/or fork carriage, etc.) of the MHV to traverse (e.g., move the forks up to a full load depth), tilt, reach (e.g., move the forks up to a partial load depth), rotate, drive (e.g., move the MHV), travel (e.g., move the MHV), and/or any combination thereof to complete a load handling operation.

As should be noted, for certain types of vehicles there are training requirements imposed by various government agencies, laws, rules and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

Conventional material handling vehicles may include a tiller arm to control operation of the material handing vehicle. For example, the tiller arm may be utilized by an operator to steer, advance (e.g., move), or brake the material handling vehicle. However, during use of the tiller arm, the operator may be unaware of the positioning of the tiller arm with regard to a braking or operational position of the tiller arm.

Examples of the present disclosure can address these problems, for example, by providing a tiller arm detection system that monitors the position of the tiller arm. The tiller arm detection system may further communicate with a feedback system to provide feedback to an operator indicative of the position of the tiller arm with respect to a braking zone or an operational zone. In some examples, the feedback may include audible, tactile, visual, or mechanical feedback.

Further, to determine the position of the tiller arm, the tiller arm may include a cam assembly at one end that includes a first cam arranged parallel to and laterally offset from a second cam. The first and second cams may include different surface profiles configured to interact with a first and second sensors. For example, the first cam may include a first protrusion and the second cam may include a second protrusion and a third protrusion separated by a gap. In some examples, the first and second cams may be arranged so that the first protrusion is aligned with the gap between the second and third protrusions.

During movement of the tiller arm, the first sensor may detect the first protrusion to determine whether the tiller arm is in a braking zone (when the first protrusion is not detected) or in an operational zone (when the first protrusion is detected). Correspondingly, the second sensor may detect the second protrusion or the third protrusion to determine whether the tiller arm is in a first transitional zone (when the second protrusion is detected) or a second transitional zone (when the third protrusion is detected). In some examples, the feedback system may provide feedback indicative of the position of the tiller arm when the tiller arm is determined to be in the first or second transitional zones. In some examples, the first sensor may detect the first protrusion while the second sensor detects the second or third protrusions.

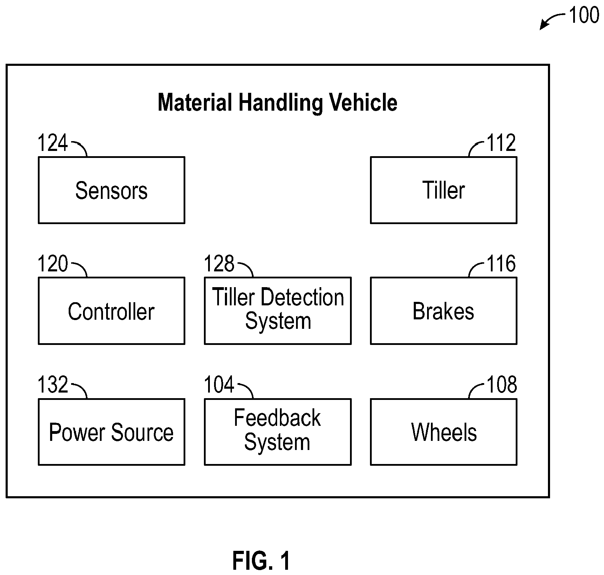

FIG. 1 illustrates an example of a material handling vehicle (MHV) 100 including a tiller arm detection system 128. In one example, the tiller arm detection system 128 may be configured to determine a position (e.g., angular position) of a tiller arm 112 of the material handling vehicle 100. For example, the tiller arm detection system 128 may include and communicate with one or more sensors 124 (e.g., proximity sensors, distance sensors, etc.) to detect the position of the tiller arm 112 during operation of the material handing vehicle 100. In some examples, based on the position of the tiller arm 112, a controller 120 may output a command to a feedback system 104, which may indicate to an operator that the tiller arm 112 is approaching a braking position (e.g., a substantially horizontal or vertical position of the tiller arm 112). In some examples, the feedback system 104 may include haptic feedback, visual feedback, audible feedback, mechanical feedback, or any combination thereof. As should be appreciated, the feedback system 104 may mitigate an instance of an operator inadvertently activating a brake 116 of the material handling vehicle 100 during operation of the vehicle.

In some examples, the material handling vehicle 100 can include a power source 132 (e.g., an electric motor, internal combustion engine, etc.), which may be operably connected to one or more wheels 108 used to move the material handling vehicle 100. In some examples, the power source 132 and wheels 108 may be operably connected to the tiller arm 112 so that the tiller arm 112 may control operation of the material handling vehicle 100 (e.g., control movement speed, direction, etc.). For example, the tiller arm 112 can be rotated or otherwise manipulated by an operator to control the movement speed and direction of the material handing vehicle 100. As mentioned above, the material handling vehicle 100 includes brakes 116, which may be activated or deactivated based on the position of the tiller arm 112. For example, when the tiller arm is in a first (e.g., home) position, the brakes 116 may be automatically activated. In one example, the first position of the tiller arm may correspond with a substantially vertical arrangement of the tiller arm 112. In some examples, the brakes 116 may also be activated when the tiller arm 112 is at a substantially horizontal position.

In some examples, prior to actuating the brakes 116, the controller 120 may activate the feedback system 104 to alert an operator that the brakes 116 may soon be engaged. For example, the controller 120 may determine the angular position of the tiller arm 112 via the sensors 124 and, based on the position of the tiller arm 112, send feedback to the operator indicating that further movement (e.g., rotation) of the tiller arm 112 may activate the brake 116. Thus, the feedback system 104 may mitigate an instance of inadvertent activation of the brakes 116 during operation of the material handling vehicle 100. In some examples, the feedback system 104 may provide feedback to the operator via one or more lights, audible feedback, tactile feedback (e.g., haptic feedback), or mechanical feedback (e.g., slowing movement of the material handling vehicle 100).

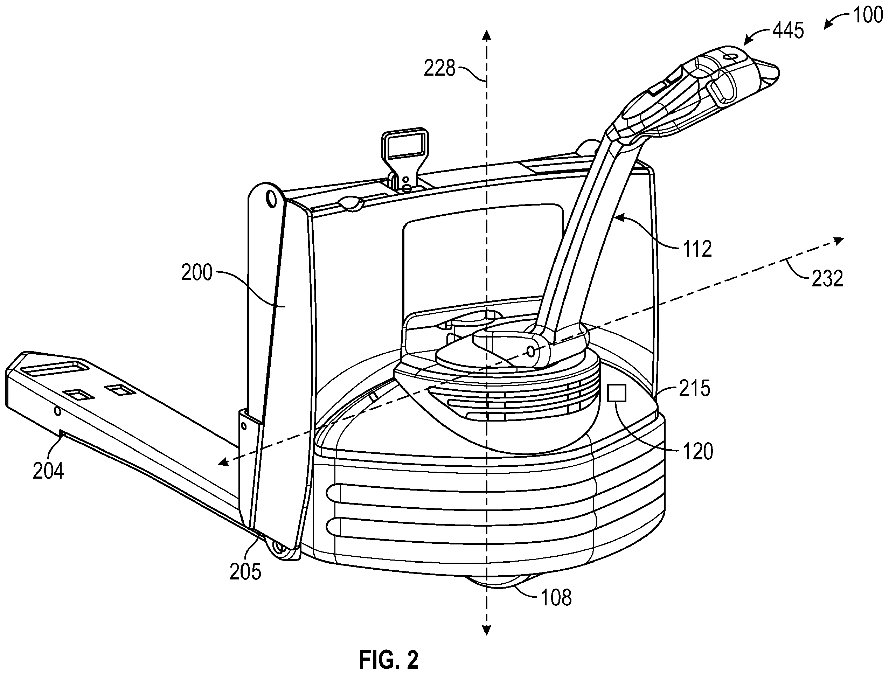

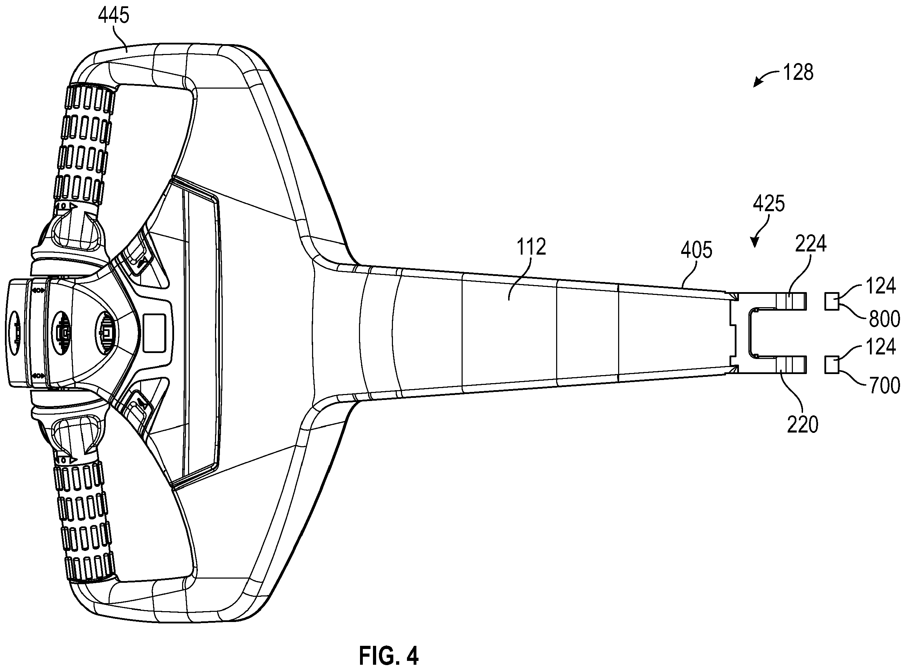

FIG. 2 illustrates one example of the material handling vehicle 100, which may include a body 200 having one or more forks 204 extending from a first end 205 of the body 200. The forks 204 can be configured to lift, hold, or otherwise transport a load during operation of the material handling vehicle 100. In some examples, the tiller arm 112 may extend from a second, opposite end 215 of the body 200. As mentioned previously, the tiller arm 112 can be rotatably coupled to the body 200. For example, the tiller arm 112 can rotate relative to the body 200 about a vertical axis 228 (e.g., an axis substantially perpendicular to a ground plane that supports the material handling vehicle 100). Further, the tiller arm 112 may also rotate about a horizontal axis 232 (e.g., an axis substantially perpendicular to the vertical axis 228). In some examples, rotating the tiller arm 112 about the vertical axis 228 may steer the material handling vehicle 100 (e.g., via movement of the wheels 108). Correspondingly, rotation of the tiller arm 112 about the horizontal axis 232 may activate or deactivate the brakes 116 to permit movement of the material handling vehicle 100. In some examples, the tiller arm 112 may include a handle 445 (see, e.g., FIG. 4) to permit an operator to grip and operate the tiller arm 112.

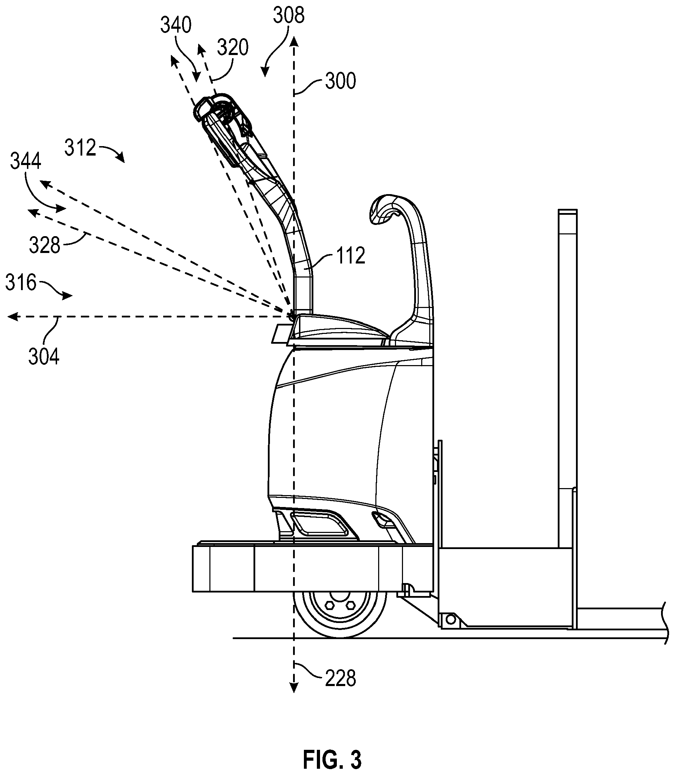

Referring now to FIG. 3, the tiller arm 112 may be rotatable through multiple positions (e.g., angular positions), which may each correspond to a corresponding operation of the material handling vehicle 100. For example, in a first (e.g., home) position 300 the brakes 116 of the material handling vehicle 100 may be applied to prevent forward movement of the vehicle. In some examples, in the first position 300, a portion of the tiller arm 112 may be positioned substantially parallel to the vertical axis 228. Further, in some examples, the tiller arm 112 may be configured to automatically return to the first position 300 (and thus apply the brakes 116) if the operator releases the tiller arm 112. For example, a resilient member (e.g., a spring or other known resilient member) may bias the tiller arm 112 into the first position 300 (e.g., known as a Deadman brake system). In some examples, when the tiller arm 112 is in a second position 304, the brakes 116 may be applied (e.g., similar to in the first position 300). In some examples, in the second position 304, a portion of the tiller arm 112 may be positioned substantially perpendicular to the vertical axis 228.

In some examples, in addition to the first and second positions 300, 304, the tiller arm 112 may be movable between a plurality of control zones arranged between the first and second positions 300, 304. For example, the tiller arm 112 may be rotated between a first brake zone 308, an operational zone 312, and a second brake zone 316. In some examples, the first brake zone 308 may be arranged between the first position 300 and a first brake boundary 320 of the operational zone 312. The operational zone 312 may be arranged between the first brake boundary 320 and a second brake boundary 328. Correspondingly, the second brake zone 316 may be arranged between the second brake boundary 328 of the operational zone 312 and the second position 304.

In some examples, when the tiller arm 112 is positioned within the first brake zone 308 or the second brake zone 316, the brakes 116 of the material handling vehicle 100 may be engaged. Correspondingly, when the tiller arm 112 is positioned within the operational zone 312, the brakes 116 may be disengaged, and the material handling vehicle 100 may be moved through a work area. In some examples, the operational zone 312 may be larger than one or both of the first and second brake zones 308, 316.

In some examples, the tiller arm 112 may further be moveable between a first transition zone 340 and a second transition zone 344. The first and second transition zones 340, 344 can be disposed within the operational zone 312 (e.g., as a portion of the operational zone 312), adjacent the first and second brake boundaries 320, 328, respectively. Specifically, the first and second transition zones 340, 344 may extend from the first and second brake boundaries 320, 328, respectively, into the operational zone 312. In some examples, when the tiller arm 112 is within the first or second transition zones 340, 344, the feedback system 104 may be activated. For example, the feedback system may be activated to notify an operator that further movement of the tiller (e.g., towards the respective brake zone) may activate the brakes 116 of the material handling vehicle 100. As should be appreciated, in some examples, the feedback system may be configured to notify the operator only when passing out of the operational zone 312 into either the first or second brake zones 308, 316, but may not notify the operator when passing into the operational zone 312 from either the first or second brake zones 308, 316.

Turning to FIGS. 4-6, the tiller detection system 128 may include the tiller arm 112 and the one or more sensors 124. The one or more sensors 124 may determine the position (e.g., angular position) of the tiller arm 112 via the position of one or more cams of a cam assembly 425 at a first end 405 of the tiller arm 112. In some examples, the cam assembly 425 may include a first cam 220 and a second cam 224. The first cam 220 and the second cam 224 may be laterally spaced from each other so that each cam may correspond to a sensor 124. For example, the first cam 220 may correspond to a first sensor 700 while the second cam 224 may correspond to a second sensor 800. In some examples, the cams 220, 224 may each define different surface profiles configured to trigger the sensors 124 at different rotational positions.

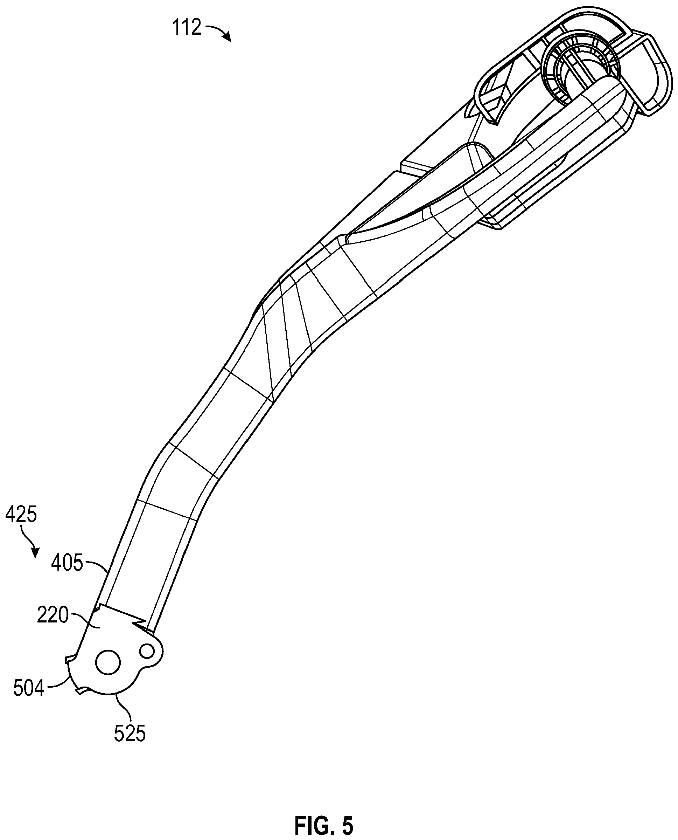

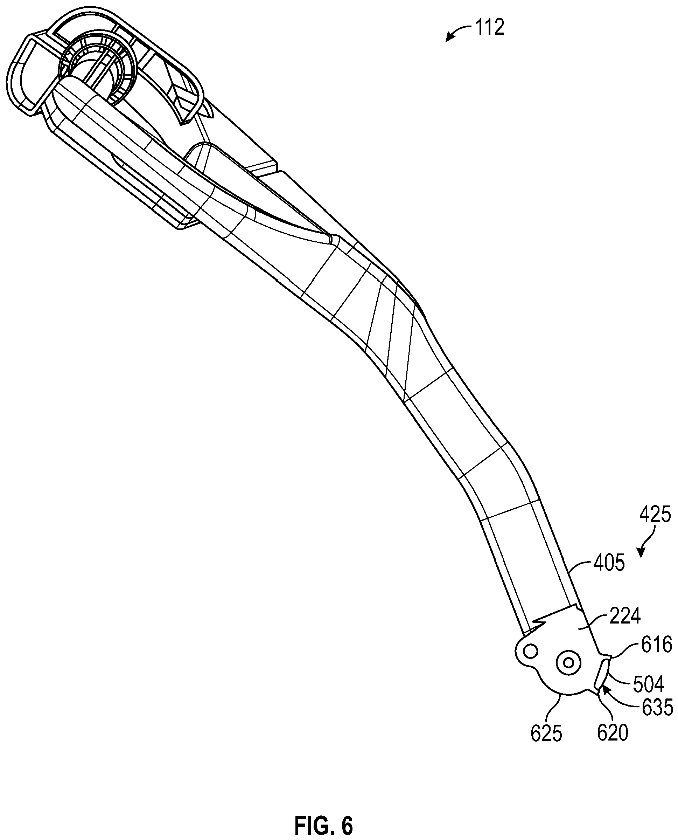

For example, looking at FIG. 5, a first cam 220 may include a protrusion 504 (e.g., a single protrusion) extending away from a surface 525 of the first cam 220 and defining a substantially arcuate surface profile. In some examples, the first cam 220 may be configured to interact with the first sensor 700 to indicate whether the tiller arm 112 is in the first brake zone 308, operational zone 312, or the second brake zone 316. Correspondingly, looking at FIG. 6, the second cam 224 may include a pair of protrusions 616, 620 extending away from a surface 625 of the second cam 224. The protrusions 616, 620 may be separated from each other by a gap 635, which may correspond with the size of the protrusion 504 of the first cam 220. In some examples, the protrusions 616, 620 may be configured to interact with the second sensor 800 to indicate whether the tiller arm 112 is in the first transition zone or the second transition zone.

In some examples, the protrusions 616, 620 may be spaced such that, when viewed from a side view, the protrusion 504 may be substantially arranged between the protrusions 616, 620. Thus, during rotation of the tiller arm 112, the protrusions 616, 620 may be sensed by the sensors 124 when the protrusion 504 is about to leave the field of view of the sensor 124. Thus, when the sensor 124 senses one of the protrusions 616, 620, the feedback system may trigger a notification to alert an operator that the further rotation of the tiller arm 112 may activate the brakes.

In some examples, the sensors 124 may be in the form of a switch or button that may depressed or otherwise actuated by the cams 220, 224 (e.g., during rotation of the cams). The sensors 124 may be in the form of time of flight sensors, infrared proximity sensors, pressure sensors, ultrasonic sensors, inductive sensors, hall-effect sensors, or any other known sensor.

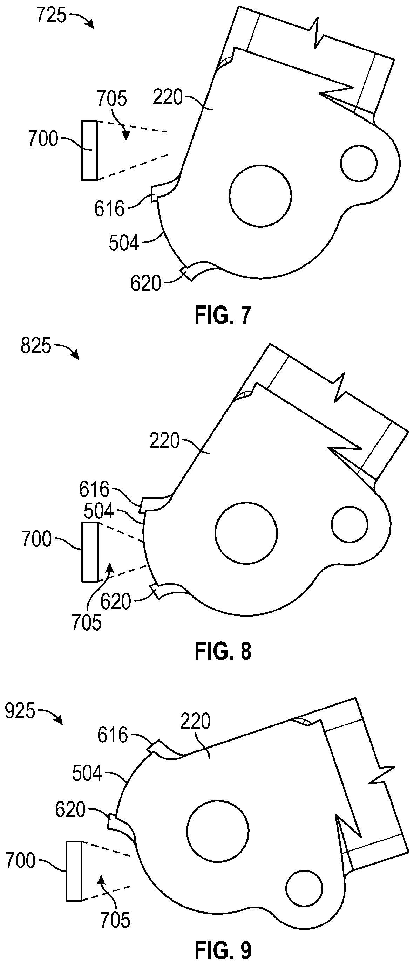

Referring to FIGS. 7-14, an example operation of the tiller arm 112 is shown, with particular reference to the interaction between the cams 220, 224 and the sensors 700, 800 during operation (e.g., rotation) of the tiller arm 112. For example, the protrusions 504, 616, 620 extending from the cams 220, 224 may be sensed by the sensors 700, 800 during rotation of the tiller arm 112 to determine if the tiller arm 112 is positioned within the operating zone 312, the first braking zone 308, the second braking zone 316, the first transition zone 340, or the second transition zone 344.

As illustrated in FIGS. 7-9, the first sensor 700 may be aligned with the first cam 220 and configured to sense the first protrusion 504 extending from the first cam 220. For example, the first sensor 700 may define a first sensing area 705 (e.g., field of view) in which the first sensor 700 detects the presence of the first protrusion 504. In some examples, detection of the first protrusion 504 within the first sensing area 705 can be utilized to determine if the tiller arm 112 is within the first braking zone 308, the second braking zone 316, or the operating zone 312.

For example, as shown in FIG. 7, when the tiller arm 112 is in a first position 725 (e.g., a vertical or home position), the first sensor 700 may not detect the first protrusion 504. Thus, the controller 120 may determine that the tiller is in the braking zone 308 and may engage the brakes 116. Correspondingly, as shown in FIG. 9, when the tiller arm 112 is in a third position 925 (e.g., a horizontal position), the first sensor 700 may not detect the first protrusion 504. Thus, the controller may determine that the tiller is in the braking zone 316 and may engage the brakes 116. In another example, as shown in FIG. 8, when the tiller arm 112 is in a second position 825, the first sensor 700 may detect the first protrusion 504. Thus, the controller 120 may determine that the tiller arm 112 is in the operating zone 312 and may disengage the brakes 116 to permit movement of the material handling vehicle 100.

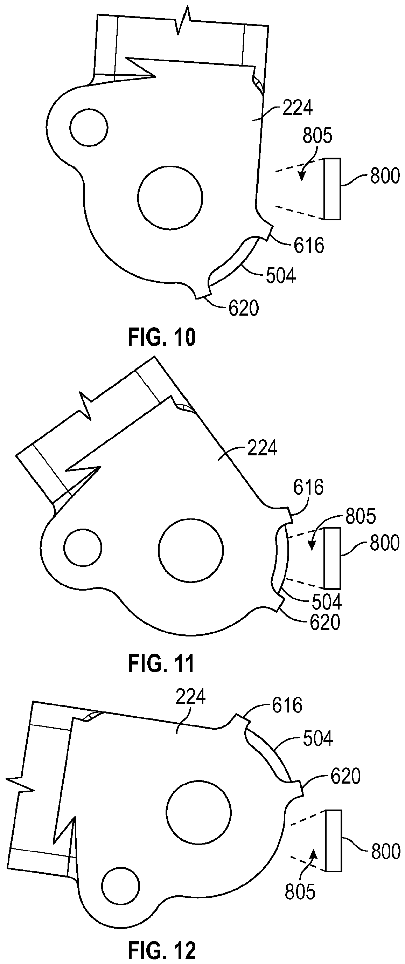

As illustrated in FIGS. 10-14, the second sensor 800 may be aligned with the second cam 224 and configured to sense the second protrusion 616 and the third protrusion 620. For example, the second sensor 800 may define a second sensing area 805 (e.g., field of view) in which the second sensor 800 detects the presence of either second protrusion 616 or the third protrusion 620. In some examples, detection of the second protrusion 616 or the third protrusion 620 within the second sensing area can be utilized to determine if the tiller arm 112 is within the first or second transition zones 340, 344. Correspondingly, detection of the protrusions 616, 620 may engage the feedback system 104 to send feedback to the operator that the brakes 116 may be applied upon further movement (e.g., rotation) of the tiller arm 112.

For example, as shown in FIG. 10, when the second sensor 800 does not detect either the second protrusion 616 or the third protrusion 620 and the first sensor 700 does not detect the first protrusion 504, the controller 120 may determine that the tiller arm 112 is in the braking zone 308 and may engage the brakes 116. Correspondingly, as shown in FIG. 12, when the second sensor 800 does not detect the second protrusion 616 or the third protrusion 620 and the first sensor 700 does not detect the first protrusion 504, the controller 120 may determine that the tiller arm 112 is in the braking zone 316 and may engage the brakes 116. In another example, as shown in FIG. 11, when the second sensor 800 does not detect the second protrusion 616 or the third protrusion 620 and the first sensor 700 detects the first protrusion 504, the controller may determine that the tiller arm 112 is in the operating zone 312 and may disengage the brakes 116 to permit movement of the material handling vehicle 100.

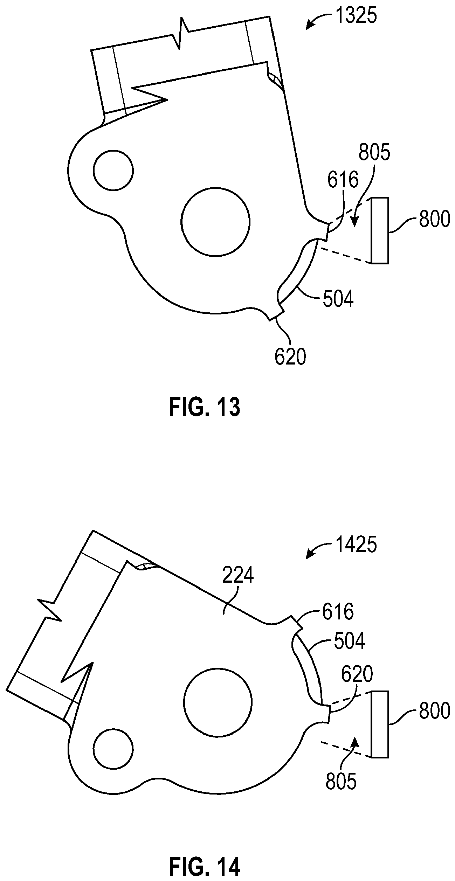

In some examples, as shown in FIG. 13 in a fourth position 1325, the second sensor 800 detects the second protrusion 616 and the first sensor 700 detects the first protrusion 504. Thus, the controller 120 may determine that the tiller arm 112 is within the first transition zone 340 and that the tiller arm 112 is about to enter the braking zone 308. In some examples, the controller 120 may trigger the feedback system 104 to provide feedback to notify an operator that further movement of the tiller arm 112 may activate the brakes 116. For example, the feedback system 104 may trigger an audible, tactile, visual, or mechanical feedback.

Correspondingly, as shown in FIG. 14 in a fifth position 1425, the second sensor 800 detects the third protrusion 620 and the first sensor 700 detects the first protrusion 504. Thus, the controller 120 may determine that the tiller arm 112 is within the second transition zone 344 and that the tiller arm 112 is about to enter the braking zone 316. In some examples, the controller 120 may trigger the feedback system 104 to provide feedback to notify an operator that further movement of the tiller arm 112 may activate the brakes 116. For example, the feedback system 104 may trigger audible, tactile, visual, or mechanical feedback.

As should be appreciated, in some examples, the feedback system 104 may only be triggered when the tiller arm 112 transitions from the operational zone 312 into either of the braking zones 308, 316. Thus, when the tiller arm 112 transitions from the braking zones 308, 316 into the operational zone 312, the feedback system 104 may not be activated and may not provide feedback to an operator. Put differently, the feedback system 104 may be unidirectional in operation, which may serve to assist an operator in learning the operational boundaries of the tiller arm 112.

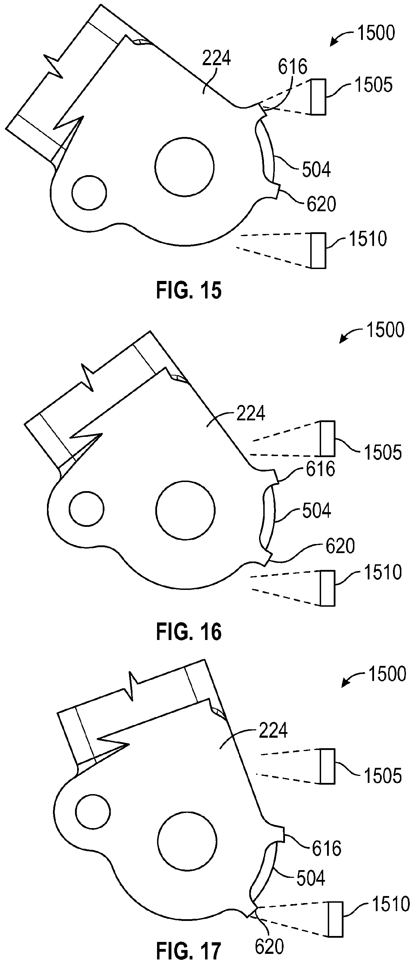

FIGS. 15-17 illustrate another example of a tiller detection system 1500. As will be recognized, the tiller detection system 1500 shares a number of components in common with and operates in a similar fashion to the examples illustrated and described previously (e.g., the tiller detection system 128). For the sake of brevity, these common features will not be again described below in detail. Rather, previous discussion of commonly named or numbered features, unless otherwise indicated, also applies to example configurations of the tiller detection system 1500.

In some examples, rather than using a single second sensor 800 to sense the second cam 224, the tiller detection system 1500 may utilize a pair of sensors. For example, each of the second and third protrusions 616, 620 may include a respective sensor. For example, the second protrusion 616 may include a second sensor 1505 and the third protrusion 620 may include a third sensor 1510.

In some examples, as shown in FIG. 15, when the second sensor 1505 detects the second protrusion 616, the controller 120 may determine that the tiller arm 112 is about to enter the braking zone 308 (e.g., is within the first transition zone 340) and may trigger the feedback system 104 to provide feedback to notify an operator. For example, the feedback system 104 may trigger audible, tactile, visual, or mechanical feedback. Correspondingly, as shown in FIG. 17, when the third sensor 1510 detects the third protrusion 620, the controller 120 may determine that the tiller arm 112 is about to enter the braking zone 316 (e.g., is within the second transition zone 344) and may trigger the feedback system 104 to provide feedback to notify an operator. For example, the feedback system 104 may trigger audible, tactile, visual, or mechanical feedback. In another example, as shown in FIG. 16, when neither the second sensor 1505 nor the third sensor 1510 sense the respective second or third protrusions 616, 620, the feedback system 104 may not be triggered.

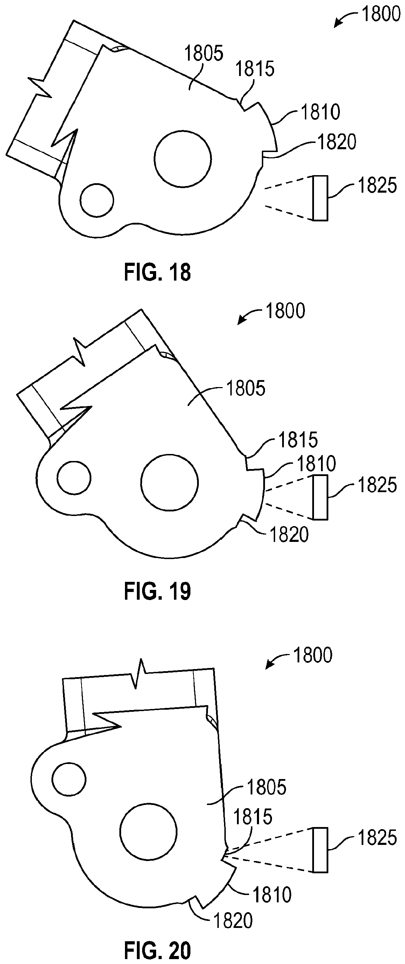

FIGS. 18-20 illustrate another example of a tiller detection system 1800. As will be recognized, the tiller detection system 1800 shares a number of components in common with and operates in a similar fashion to the examples illustrated and described previously (e.g., the tiller detection systems 128, 1500). For the sake of brevity, these common features will not be again described below in detail. Rather, previous discussion of commonly named or numbered features, unless otherwise indicated, also applies to example configurations of the tiller detection system 1800.

In one example, rather than including a pair of cams (e.g., cams 220, 224) having different surface profiles, the tiller arm 112 may include a single cam 1805 (or a pair of cams) having the same surface profile. The surface profile may include a protrusion 1810 and a pair of ledges 1815, 1820. In some examples, the ledges 1815, 1820 may be arranged on either side of the protrusion 1810. In use, the ledges 1815, 1820 may take the place of the protrusions 616, 620.

For example, as shown in FIG. 18, when a sensor 1825 does not detect the protrusion 1810 or either of the ledges 1815, 1820, the controller 120 may determine that the tiller arm 112 is in the braking zone 316 and may engage the brakes 116. In another example, as shown in FIG. 19, when the sensor 1825 does not detect the ledges 1815, 1820, but does detect the protrusion 1810, the controller 120 may determine that the tiller arm 112 is in the operating zone 312 and may disengage the brakes 116 and permit operation of the material handling vehicle 100. In yet another example, as shown in FIG. 20, when the sensor 1825 does not detect the protrusion 1810, but does detect one of the ledges 1815, 1820, the controller 120 may determine that the tiller arm 112 is about to enter the braking zone 308 and may trigger the feedback system 104 to provide feedback to notify an operator, while still permitting operation of the material handling vehicle 100. For example, the feedback system 104 may trigger audible, tactile, visual, or mechanical feedback.

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

As used herein, unless otherwise limited or defined, "integral" and derivatives thereof (e.g., "integrally") describe elements that are manufactured as a single piece without fasteners, adhesive, or the like to secure separate components together. For example, an element stamped, cast, or otherwise molded as a single-piece component from a single piece of sheet metal or using a single mold, without rivets, screws, or adhesive to hold separately formed pieces together is an integral (and integrally formed) element. In contrast, an element formed from multiple pieces that are separately formed initially then later connected together, is not an integral (or integrally formed) element.

Unless otherwise limited or defined, "substantially parallel" indicates a direction that is within plus or minus 12 degrees of a reference direction (e.g., within plus or minus 6 degrees or plus or minus 3 degrees), inclusive. Correspondingly, "substantially vertical" indicates a direction that is substantially parallel to the vertical direction, as defined relative to gravity, with a similarly derived meaning for "substantially horizontal" (relative to the horizontal direction). Likewise, unless otherwise limited or defined, "substantially perpendicular" indicates a direction that is within plus or minus 12 degrees of perpendicular a reference direction (e.g., within plus or minus 6 degrees or plus or minus 3 degrees), inclusive.

Unless otherwise limited or defined, the terms "about" and "approximately," as used herein with respect to a reference value, refer to variations from the reference value of plus or minus 20 percent or less (e.g., plus or minus 15 percent, plus or minus 10 percent, plus or minus 5 percent, etc.), inclusive of the endpoints of the range. Similarly, as used herein with respect to a reference value, the term "substantially equal" (and the like) refers to variations from the reference value of less than plus or minus 5 percent (e.g., plus or minus 2 percent, plus or minus 1 percent, plus or minus 0.5 percent) inclusive.

As used herein, unless otherwise defined or limited, any range of values that is described as being between a start value and an end value is defined to be inclusive of the start value and the end value.

As used herein, unless otherwise defined or limited, directional terms are used for convenience of reference for discussion of particular figures or examples. For example, references to downward (or other) directions or top (or other) positions may be used to discuss aspects of a particular example or figure, but do not necessarily require similar orientation or geometry in all installations or configurations.

The previous description of the disclosed embodiments is provided to enable any person skilled in the art to make or use the invention. Given the benefit of this disclosure, various modifications to these embodiments will be readily apparent to those skilled in the art, and the principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A tiller arm detection system for a material handling vehicle (100), the tiller arm detection system comprising:
a tiller arm (112), including:
a cam assembly (425), the cam assembly (425) having a first cam (220) with a first surface profile and a second cam (224) with a second, different surface profile;
a first sensor (700), the first sensor (700) to detect a portion of the first cam (220);
a second sensor (800), the second sensor (800) to detect a portion of the second cam (224); and
a controller (120), the controller (120) to communicate with the first sensor (224) and the second sensor (224) to determine a position of the tiller arm (112) based on the detected portion of the first cam (220) or the second cam (224), and the controller (120) to activate a feedback system (104) based on the detected portion of the first cam (220) or the second cam (224).

2. The system of claim 1, wherein the first cam (220) includes a first protrusion (504) defining the first surface profile.

3. The system of claim 2, wherein the second cam (224) includes a second protrusion (616) and a third protrusion (620) separated by a gap (635), the second protrusion (616), third protrusion (620), and the gap (635) defining the second surface profile.

4. The system of claim 3, wherein the first cam (220) is laterally offset from the second cam (224), and wherein the first cam (220) is arranged so that the first protrusion (504) of the first cam (220) is arranged substantially within the gap (504) formed between the second protrusion (616) and third protrusion (620) of the second cam (224).

5. The system of any of the claims 2-4, wherein, when the first sensor (700) detects the first protrusion (504) of the first cam (220), the controller (120) determines that the tiller arm (112) is in an operational zone (312) of the material handling vehicle (100).

6. The system of any of the claims 2-5, wherein, when the first sensor (700) does not detect the first protrusion (504) of the first cam (220), the controller (120) determines that the tiller arm (112) is in a braking zone (308, 316) of the material handling vehicle (100).

7. The system of any of the claims 3-6, wherein, when the second sensor (800) detects the second protrusion (616) or the third protrusion (620) of the second cam (224), the controller (120) determines that the tiller arm (112) is in a transitional zone (340, 344).

8. The system of claim 7, wherein, when the controller (120) determines that the tiller arm (112) is in the transitional zone (340, 344), the controller (120) activates the feedback system (104) to provide feedback to an operator of the material handling vehicle (100).

9. The system of claim 8, wherein the feedback is audible, tactile, visual, or mechanical feedback.

10. The system of claim 8 or 9, wherein the feedback system is activated when the tiller arm (112) moves from an operational zone (312) to the transitional zone (340, 344) and is not activated when the tiller arm (112) moves from a braking zone (308, 316) to the transitional zone (340, 344).

11. A method of providing feedback to an operator of a material handling vehicle (100), the method comprising:
detecting, via a first sensor (700), a first cam (220) of a cam assembly (425) arranged at an end of a tiller arm (112) of the material handling vehicle (100), the first cam (700) defining a first surface profile;
detecting, via a second sensor (800), a second cam (224) of the cam assembly, the second cam (224) defining a second, different surface profile;
determining, via a controller (120) in communication with the first sensor (700) and the second sensor (800), a position of the tiller arm (112); and
based on the position of the tiller arm (112), activating a feedback system (104) of the material handling vehicle (100) to provide feedback to an operator corresponding to the position of the tiller arm (112).

12. The method of claim 11, wherein the first cam (220) includes a first protrusion (504) defining the first surface profile.

13. The method of claim 12, wherein the second cam (224) includes a second protrusion (616) and a third protrusion (620) separated by a gap (635), the second protrusion (616), third protrusion (620), and the gap (635) defining the second surface profile.

14. The method of claim 13, further comprising:
determining that the tiller arm (112) is in a transitional zone (340, 344) when the second sensor (800) detects the second protrusion (616) or the third protrusion (620) of the second cam (224) and the first sensor (700) detects the first protrusion (504) of the first cam (220).

15. The method of claim 14, further comprising:
activating the feedback system (104) to provide feedback to an operator of the material handling vehicle (100) when the tiller arm (112) is in the transitional zone (340, 344).
